# EUROPEAN PATENT SPECIFICATION

(11) **EP 2 182 306 B1**
(45) Date of publication and mention of the grant of the patent: **01.11.2017**
(21) Application number: 07806115.7
(22) Date of filing: 28.08.2007
(51) Int. Cl.: F25B 13/00, F24F 11/02

(54) **AIR CONDITIONER**
KLIMAANLAGE
CONDITIONNEUR D'AIR

(43) Date of publication of application: 05.05.2010
(73) Proprietor: Mitsubishi Electric Corporation, Chiyoda-ku Tokyo 100-8310 (JP)
(72) Inventor: KAWAGOE, Tomokazu, Tokyo 100-8310 (JP); SHINOZAKI, Kazuyoshi, Tokyo 100-8310 (JP); KOGE, Hirofumi, Tokyo 100-8310 (JP)
(74) Representative: Pfenning, Meinig & Partner mbB
(86) International application number: PCT/JP2007/066593
(87) International publication number: WO 2009/028043

(56) References cited:
- JP-A- 05 099 519
- JP-A- H06 341 740
- JP-A- H11 294 886
- JP-A- 2001 235 253
- JP-A- 2001 330 332
- JP-A- 2004 085 179
- JP-A- 2006 090 683
- JP-A- 2006 300 373
- US-A- 4 770 000
- US-A- 5 161 388
- US-A- 5 347 826

## Description

### Technical Field

The present invention relates to an air conditioner for carrying out a cooling / heating operation using a refrigerating cycle (heat pump cycle) for air conditioning. The present invention particularly relates to an equipment (means) configuration for restraining an abnormal rise of a refrigerant pressure on a discharge side of a compressor which can easily occur if a heat quantity available for heat exchange is small in a load-side unit provided indoors.

### Background Art

In an air conditioner for air conditioning (room temperature adjustment) indoors or the like by a cooling / heating operation, a heating operation might be carried out even if a temperature of an outside air is high such as in the summer. For example, in the air conditioner capable of a cooling / heating mixed operation in which a plurality of load-side units carry out cooling and heating operations in each unit, cooling and heating operations are in many cases automatically determined to perform operations according to a set temperature of a remote controller provided in the air conditioner and a temperature around the load-side unit, respectively. However, the number of load-side units carrying out the heating operation is small in general when the temperature of the outside air is high. An air conditioning load in the loads-side unit (heat quantity required by the load-side unit. Hereinafter referred to as a load) carrying out the heating operation is also small, and the heat quantity for heat exchange becomes smaller in a heat exchanger provided in the load-sided unit (hereinafter referred to as a load-side heat exchanger). Moreover, in the air conditioner capable of the cooling / heating mixed operation as above, in order to promote size reduction and diversification of the load-side units, the heat quantity available for heat exchange by the load-side heat exchanger (hereinafter referred to as a heat exchange capacity) tends to be small.

On the other hand, when the heating operation is carried out in the air conditioner, a heat exchanger provided in a heat-source side unit provided outdoors or the like (hereinafter referred to as a heat-source side heat exchanger) functions as an evaporator. If a temperature of the outside air is high, the heat quantity (heat absorbing amount) absorbed by a refrigerant passing through the heat-source side heat exchanger from the outside air becomes large. As a result, an over-heating degree of a gas refrigerant on a secondary side of the heat-source side heat exchanger (to become an outlet side of the refrigerant when functioning as the evaporator) is increased and the refrigerant becomes an overheated vapor, and the compressor takes in the gas refrigerant with a high temperature. Thus, the compressor is overheated. Since the temperature of the gas refrigerant is high, the pressure of the discharged refrigerant can be raised easily.

As mentioned above, in such a state that the heat exchange capacity is small and a temperature of the refrigerant to be taken in is high, the pressure of the refrigerant discharged by the compressor is abnormally raised, thereby the compressor is further overheated. As a result, abnormal stop of the compressor might occur, which deteriorates operation efficiency such as energy consumption efficiency. An abnormal pressure rise also gives a bad influence on equipment and piping. Then, using a compressor having an inverter circuit, a driving frequency of the compressor is reduced, and a refrigerant amount (per unit time) circulating in the refrigerating cycle is decreased. A method is proposed in which a cooling / heating ability according to the load (heat quantity per hour to be supplied to the load-side unit side. Hereinafter referred to as ability) is supplied so as to suppress rise in the pressure on the discharge side (See Patent Document 1).
[Patent Document 1] Japanese Unexamined Patent Application Publication No. 5-99519 (Fig. 1)

### Disclosure of Invention

### Problems to be Solved by the Invention

Even if the driving frequency of the compressor is reduced by the inverter circuit, there is a limit in general such that the compressor has a minimum driving frequency required to keep driving, for example. If the ability when driving at the minimum driving frequency cannot be fully processed in the load-side unit, the refrigerant beyond ability is supplied to be overfed and incurs rise in the pressure on the discharge side. On the load-side unit, the heat quantity more than necessary is immediately supplied. Thus, start, temporary stop and the like of the operation frequently occur, which raises power consumption and causes drop in the energy consumption efficiency.

The present invention was made in order to solve the above problems. In an air conditioner capable of the cooling / heating mixed operation, for example, even if the number of the heating-source side units for heating operation is small and the heat exchange capacity is small, the ability corresponding to the load is supplied by circulating an appropriate amount of a refrigerant. The purpose of the present invention is to obtain an air conditioner which ensures safe operation and protection of the device and can carry out an operation with favorable energy efficiency by efficiently condensing the refrigerant.

Document US5347826 discloses an air conditioner with two bypass pipes between the compressor and the heat-source side heat exchanger.

### Means for Solving the Problems

An air conditioner according to the present invention is an air conditioner capable of a cooling / heating mixed operation by constituting a refrigerant circuit by piping connection of a heat-source side unit having a heat-source side heat exchanger and a compressor, a plurality of load-side units each having a load-side throttle device and a load-side heat exchanger, and a cooling / heating splitting unit having a gas / liquid separator for supplying a gas refrigerant to the load-side unit carrying out a heating operation and supplying a liquid refrigerant to the load-side unit carrying out a cooling operation, to circulate the refrigerant, and is provided with a bypass pipe forming a bypass into which the refrigerant discharged by the compressor is split to flow into piping leading to the inlet side of the refrigerant when the heat-source side heat exchanger functions as an evaporator, an opening / closing valve for bypass for controlling a split flow of the refrigerant to the bypass pipe by opening / closing, a throttle device for bypass for controlling an amount of said split refrigerant provided to said bypass, and control means that judges whether there is an abnormal rise or a fear of the abnormal rise of a refrigerant pressure on the discharge side of the compressor when performing an operation in which the heat-source side heat exchanger functions as an evaporator and at least one of the load-side heat exchangers functions as a condenser, and if it is judged that there is the abnormal rise or the fear of the abnormal rise, processing is executed to open the opening / closing valve for bypass and an opening degree of said throttling device is controlled on the basis of a pressure of the refrigerant on the discharge side of said compressor so as to split the refrigerant to the bypass pipe.

### Advantages

As mentioned above, the bypass pipe and the opening / closing valve for bypass are provided on the heat-source side unit, a bypass is formed so that the compressor can split the discharged refrigerant, and when an operation in which at least one of the load-side heat exchangers functions as a condenser is carried out as in a heating operation and heating-dominant operation, for example, if there is a rise or a fear of rise in the refrigerant pressure on the discharge side of the compressor, the refrigerant is made to be split into the bypass pipe by the control means, so that an ability (refrigerant amount) matched with the heat exchange capacity of the load-side heat exchanger can be supplied, an abnormal rise of the refrigerant pressure on the discharge side is suppressed, and temperature rise, abnormal stop of the compressor caused by overheat can be restrained or prevented. Further, the energy consumption efficiency can be improved such that the number of start and stop of operation in a compressor and a load-side unit is reduced to promote energy saving. Particularly, such an effect can be demonstrated in the air conditioner capable of performing cooing / heating mixed operation.

### Brief Description of the Drawings

[Fig. 1] Fig. 1 is a configuration diagram of an air conditioner in an embodiment 1 of the present invention.
[Fig. 2] Fig. 2 is a Mollier diagram (p-h diagram) of the present invention.
[Fig. 3] Fig. 3 is a diagram illustrating a flowchart relating to a high-pressure restraint control in the embodiment 1.
[Fig. 4] Fig. 4 is a table illustrating threshold values used in the control of the present invention.
[Fig. 5] Fig. 5 is a diagram illustrating a flowchart relating to a high-pressure restraint control in an embodiment 2.
[Fig. 6] Fig. 6 is a diagram illustrating a flowchart relating to a high-pressure restraint control in an embodiment 3.
[Fig. 7] Fig. 7 is a configuration diagram of another air conditioner.
[Fig. 8] Fig. 8 is a diagram illustrating a flowchart relating to a high-pressure restraint control in the air conditioner of Fig. 7.
[Fig. 9] Fig. 9 is a Mollier diagram (p-h diagram) showing transition in the control of the present invention.

### Reference Numerals

1 high-pressure pipe
2 low-pressure pipe
3a, 3b liquid branch pipe
4a, 4b gas branch pipe
10 heat-source side unit
11 compressor
12 flow-passage switching valve
13a, 13b, 13c, 13d, 13e, 13f check valve
14a, 14b, 14c heat-source side opening / closing valve
15a, 15b, 15c heat-source side heat exchanger
16a, 16b, 16c check valve
17 accumulator
18 heat-source side fan
19 oil separator
20 capillary
21 bypass pipe
22 opening / closing valve for bypass
23 throttle device for bypass
24 capillary tube
30 cooling / heating branch unit
31 gas / liquid separator
32, 33 throttle device on the cooling / heating branch unit side
34 opening / closing valve on the cooling /heating branch unit side
40 controller
40a control start judgement processing portion
40b control start-time processing portion
40c during-control processing portion
40d control end-time processing portion
41 storage device
50 load-side unit
51 load-side throttle device
52 load-side heat exchanger
54 load-side controller
61 pressure sensor
62 temperature sensor
100, 100A air conditioner

### Best Mode for Carrying Out the Invention

Descriptions will be given to embodiments of the present invention.

### EMBODIMENT 1

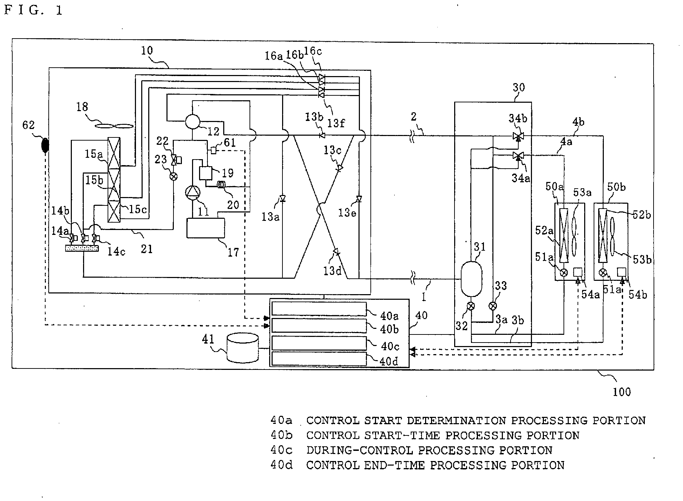

Fig. 1 is a diagram illustrating a configuration of an air conditioner 100 according to an embodiment 1 of the present invention. On the basis of Fig. 1, means or the like constituting the air conditioner 100 will be described. The air conditioner 100 carries out a cooling / heating operation using a refrigerating cycle (heat pump cycle) by a refrigerant circulation. Particularly, the air conditioner 100 is supposed to be a device capable of performing a cooling / heating mixed operation.

The air conditioner 100 of the present embodiment is roughly constituted by a heat-source side unit (outdoor unit) 10, a cooling / heating branch unit 30, and load-side units (indoor units) 50a, 50b. The heat-source side unit 10 and the cooling / heating branch unit 30 are connected by a high-pressure pipe 1 and a low-pressure pipe 2, which are refrigerant piping. Also, the cooling / heating branch unit 30 and the load-side unit 50a are connected by a liquid branch pipe 3a, which is refrigerant piping, and a gas branch pipe 4a, which is refrigerant piping, and the cooling / heating branch unit 30 and the load-side unit 50b are connected by a liquid branch pipe 3b, which is refrigerant piping, and a gas branch pipe 4b, which is refrigerant piping. By means of piping connection of the high-pressure pipe 1, the low-pressure pipe 2, the liquid branch pipes 3a and 3b, and the gas branch pipes 4a and 4b, a refrigerant circulates among the heat-source side unit 10, the cooling / heating branch unit 30, and the load-side unit 50 and constitutes a refrigerant circuit. The cooling / heating branch unit 30 switchably connects a plurality of the load-side units 50a, 50b in series or in parallel. Here, if the liquid branch pipes 3a, 3b, the gas branch pipes 4a, 4b, and the load-side units 50a, 50b do not have to be particularly discriminated, they will be described as a liquid branch pipe 3, a gas branch pipe 4, and a load-side unit 50 (if the same means are indicated in plural, they are supposed to be the same in the following). With regard to a magnitude of the pressure in the present embodiment, it is not determined by a relation with a pressure to be a reference but represented as a relative pressure by a pressurization of the compressor 11, refrigerant passage control of each throttle device and the like.

The heat-source side unit 10 of the present embodiment is constituted by the compressor 11, a four-way valve 12, a check valve 13 (13a, 13b, 13c, 13d, 13e, 13f), a heat-source side opening / closing valve 14 (14a, 14b, 14c), a heat-source side heat exchanger 15 (15a, 15b, 15c), a check valve 16 (16a, 16b, 16c), an accumulator 17, a heat-source side fan 18, an oil separator 19, a capillary 20, a bypass pipe 21, an opening / closing valve 22 for bypass, and a throttle device 23 for bypass.

The compressor 11 applies a pressure on the taken-in refrigerant so as to discharge (feed out) it. Though not particularly limited, the compressor 11 in the present embodiment is supposed to be a capacity-variable inverter compressor provided with an inverter circuit (not shown) capable of changing a capacity (refrigerant discharge amount per unit time) and ability therewith by arbitrarily changing a driving frequency above a minimum driving frequency, for example. The oil separator 19 separates refrigerator oil mixed in the refrigerant discharged from the compressor 11. The separated refrigerator oil returns to the compressor 11, while its flow rate being controlled by the capillary tube 20. The four-way valve 12 switches a valve on the basis of an instruction from a controller 40 so that a refrigerant path is switched according to a cooling operation (meaning that all the operating heat-source side units are carrying out the cooling operation here), a cooling-dominant operation (operation constituted mainly by the cooling operation in the cooling / heating mixed operation), a heating operation (meaning that all the operating heat-source side units are carrying out the heating operation here), and a heating-dominant operation (operation constituted mainly by the heating operation in the cooling / heating mixed operation).

The heat-source side heat exchanger 15 (15a, 15b, 15c) has a pipe through which the refrigerant is made to pass and a fin to enlarge a heat transfer area between the refrigerant flowing through the pipe and air (outdoor air), for example, carrying out heat exchange between the refrigerant and the air. For example, in the heating operation and the heating-dominant operation, the heat exchanger functions as an evaporator and evaporates and gasifies the refrigerant. On the other hand, in the cooling operation and the cooling-dominant operation, the heat exchanger functions as a condenser and condenses and liquefies the refrigerant. For example, in the cooling-dominant operation, adjustment is made so that condensation progresses to a state of two-phase region (gas-liquid two-phase refrigerant) of liquid and gas. Also, a heat-source side fan 20 is provided in the vicinity of the heat-source side heat exchanger 15 for efficient heat exchange between the refrigerant and the air.

Here, in the present embodiment, the heat-source side heat exchanger 15 is constituted in a form divided into three heat-source side heat exchangers 15a, 15b, 15c connected by piping in parallel with respect to the refrigerant circuit. The heat-source side heat exchangers 15a, 15b, 15c can independently pass the refrigerant to be condensed or evaporated. Though not particularly limited, in the present embodiment, respective heat exchange capacities of the heat-source side heat exchangers 15a, 15b, 15c are made to be different. For that purpose, a size or shape (heat transfer area) of the fins of each of the heat-source side heat exchangers 15a, 15b, 15c, a path count occupied by a header from the heat-source side heat exchangers 15a, 15b, 15c (ratio of the heat transfer area in each heat exchanger at division), a distance of refrigerant passage in the pipe and the like are made to be varied. Also, ease of heat exchange with the air is made to be varied (by making a distance to the heat-source side fan 20 different so as to change an amount of the air to be fed for the heat exchange, for example). Particularly, for the heat-source side heat exchanger 15b, piping (on the heat-source side heat exchanger 15b side rather than the heat-source side opening / closing valve 14) leading to a primary side of the heat-source side heat exchanger 15b (to become an inlet side through which the refrigerant flows when functioning as the evaporator) communicates with one end of the bypass pipe 21, which will be described later, so that the refrigerant having passed through the bypass pipe 21 can be made to flow into the heat-source side heat exchanger 15b.

The heat-source side opening / closing valve 14 (14a, 14b, 14c) carries out an opening / closing operation independently on the basis of the instruction from the controller 40 in order to control passage of the refrigerant to the heat-source side heat exchanger 15. The check valve 13 (13a, 13b, 13c, 13d, 13e, 13f) and the check valve 16 (16a, 16b, 16c) make a circulation path of the refrigerant changed depending on whether the operation is cooling or heating, for example, constant according to the respective operation so as to prevent a backflow. The accumulator 17 reserves an excessive refrigerant in the refrigerant circuit.

Moreover, the heat-source side unit 10 of the present embodiment has the bypass pipe 21, the opening / closing valve 22 for bypass, and the throttle device 23 for bypass. The bypass pipe 21 forms a bypass (path) from a discharge side (high-pressure side) of the compressor 11 to between the heat-source side opening / closing valve 14b and the heat-source side heat exchanger 15b. As mentioned above, one end thereof communicates with piping communicating with the primary side of the heat-source side heat exchanger 15b. The opening / closing valve 22 for bypass is provided at a portion on the bypass branching from the piping on the discharge side of the compressor 11 and carries out an opening / closing operation on the basis of the instruction from the controller 40. While the opening / closing valve 22 for bypass opens the valve, a part of the refrigerant discharged from the compressor 11 is branched, split, and made to pass through the bypass pipe 21. The throttle device 23 for bypass is constituted by electronic expansion valves and the like capable of changing an opening degree, for example. The throttle device 23 for bypass is also provided on the bypass, opened with an opening degree on the basis of the instruction from the controller 40, splits a flow and controls the refrigerant flow passing through the bypass pipe 21. The refrigerant having passed through the bypass constitutes a circuit of another circulation path passing through the heat-source side heat exchanger 15b and leading to the compressor 11 via the accumulator 17 (hereinafter referred to as a bypass circuit) against the regular circulation path (hereinafter referred to as a refrigerant main circuit).

The cooling / heating branch unit 30 of the present embodiment is constituted by the gas / liquid separator 31, the throttle devices 32 and 33 on the cooling / heating branch unit side, and the opening / closing valve 34 (34a, 34b) for cooling / heating branch unit. The gas / liquid separator 31 separates the refrigerant inflow in the gas-liquid two-phase state into a gas refrigerant and a liquid refrigerant. The throttle devices 32 and 33 on the cooling / heating branch unit side are also constituted by electronic expansion valves and the like, opened with an opening degree on the basis of the instruction from the controller 40, and control the flow of the liquid refrigerant and the refrigerant amount.

The load-side unit 50 (50a, 50b) of the present embodiment is constituted by the load-side throttle device 51 (51a, 51b), the load-side heat exchanger 52 (52a, 52b), the load-side fan 53 (53a, 53b), and the load-side controller 54 (54a, 54b). The load-side throttle device 51 functions as a pressure reducing valve and an expansion valve and adjusts a pressure of the refrigerant passing through the load-side heat exchanger 52. The load-side throttle device 51 of the present embodiment is also constituted by an electronic expansion valve and the like capable of changing the opening degree, for example. The load-side heat exchanger 52 functions as an evaporator in the cooling operation and a condenser in the heating operation, carries out heat exchange between the refrigerant and the air (indoor air), and evaporates the refrigerant so as to gasify it or condenses the refrigerant so as to liquefy it. The load-side fan 53 also adjusts the air flow to be used for heat exchange similarly to the heat-source side fan 18. Here, a rotation speed of the load-side fan 53 is not changed by a state of the refrigerant circulating in the refrigerant circuit as the heat-source side fan 18, for example, but is determined by setting of an indoor user. In the present embodiment, there is no setting change by the user and the rotation speed is supposed to be constant. Here, the load-side heat exchanger 52 has a small heat transfer area since its fan is not so large as the heat-source side heat exchanger 15 in general. The pipe is short and the distance through which the refrigerant flows is also short. Further, the load-side fan 53 has an air volume smaller than the heat-source side fan 18 in general. Thus, the heat exchange capacity of a single load-side heat exchanger 52 becomes considerably smaller than that of the heat-source side heat exchanger 15.

The load-side controller 54 controls an operation of each of equipment (means) constituting the load-side unit 50 on the basis of room temperature setting by the indoor user and the instruction from the controller 40, for example. The controller transmits a signal containing various data relating to the load-side unit 50 such as an operation state of the load-side unit 50, a state of each of the equipment (means), physical amounts (physical parameters) detected by various sensors provided at the load-side unit 50 or the like to the control means through a communication line (not shown). In the present embodiment, the case in which two units of the load-side unit 50 are provided is shown as an example, but not limited to that, three or more units of the load-side unit 50 may be provided.

The controller 40 carries out determination processing on the basis of a signal transmitted from various sensors (detection means) provided inside and outside the air conditioner 100 and each of the equipment of the air conditioner 100, for example. The controller has a function to operate each of the equipment on the basis of the determination to control the operation of the entire air conditioner 100 in an integrated manner. Specifically, the control includes driving frequency control of the compressor 11, opening degree control of the load-side throttle device 51, the throttle devices 32 and 33 on the cooling / heating branch unit side of the cooling / heating branch unit 30, and opening / closing control of the opening / closing valve 14, the opening / closing valve 34 for cooling / heating branch unit or the like. Here, the controller 40 in the present embodiment is supposed to have a control start judgement processing portion 40a, a control start-time processing portion 40b, a during-control processing portion 40c, and a control end-time processing portion 40d, particularly, in order to execute a high-pressure restraint control using the bypass mentioned later. The processing contents executed by these processing portions will be described later. A storage device 41 stores data, program and the like required for processing by the controller 40 temporarily or for a long time.

Moreover, in the present embodiment, as the detection means for detecting a physical quantity with which the controller 40 executes high-pressure restraint control, a pressure sensor 61 and a temperature sensor 62 are particularly provided. The pressure sensor 61 is provided in the piping on the discharge side in the heat-source side unit 10 in order to monitor a pressure PS (hereinafter referred to as high-pressure PS) of the refrigerant in the piping on the discharge side (high pressure side) of the compressor 11 to transmit a signal on the basis of the detection. The temperature sensor 62 is provided in order to monitor a temperature (since the heat-source side unit 10 is often placed outdoors, the temperature is a temperature of the outside air. Hereinafter, referred to as an ambient temperature T) around the heat-source side unit 10 to transmit a signal on the basis of the detection. Though not shown and the description is omitted here, other various sensors (detection means) for monitoring and detecting a temperature of the refrigerant discharged from the compressor 11 and a pressure of the refrigerant in the piping on the intake side (low-pressure side) of the compressor 11 may be provided inside and outside the air conditioner 100.

Here, the refrigerant used in the air conditioner 100 and circulating in the refrigerant circuit will be described. The refrigerant used in the air conditioner 100 includes nonazeotropic refrigerant mixture, pseudo zeotropic refrigerant mixture, single refrigerant and the like. The nonazeotropic refrigerant mixture includes R407C (R32/R125/R134a), which is an HFC (hydrofluorocarbon) refrigerant. Since the nonazeotropic refrigerant mixture is a mixture of refrigerants with different boiling points, it has a characteristic that composition ratios of a liquid-phase refrigerant and gas-phase refrigerant are different. The pseudo zeotropic refrigerant mixture includes R410A (R32/R125) and R404A (R125/R143a/R134a), which are HFC refrigerants. The pseudo zeotropic refrigerant mixture has a characteristic of an operation pressure of approximately 1.6 times of R22 in addition to characteristics similar to the nonazeotropic refrigerant mixture.

A single refrigerant includes R22, which is an HCFC (hydrochlorofluorocarbon) refrigerant, and R134a, which is an HFC refrigerant. Since the single refrigerant is not a mixture, it has a characteristic that handling thereof is easy. Other than the above, carbon dioxide, propane, isobutane, ammonia and the like, which are natural refrigerants, may be used. R22 indicates chlorodifluoromethane, R32 difluoromethane, R125 pentafluoromethane, R134a 1,1,1,2-tetrafluoromethane, and R143a 1,1,1-trifluoroethane, respectively. A refrigerant according to an application and a purpose of the air conditioner 100 in the above refrigerants may be used.

In the air conditioner 100 of the present embodiment, in the heating operation and heating-dominated operation, when the compressor 11 is driven at a minimum driving frequency, for example, when it is determined that the high-pressure PS becomes a pressure not less than a predetermined threshold value, the controller 40 opens the opening / closing valve 22 for bypass. Then, while the throttle device 23 for bypass adjusts the refrigerant amount, a part of the gas refrigerant discharged from the compressor 11 is split and made to pass through the bypass. By splitting the refrigerant flow, the refrigerant amount flowing to the load-side unit 50 side is reduced, and the ability of the compressor 11 to supply it to the load-side unit 50 side is restrained. As a result, the ability is supplied within a range of the heat exchange capacity of the load-side heat exchanger 52 so that condensation according to a load required by the load-side unit 50 can be carried out.

On the other hand, the refrigerant having passed through the bypass is made to further pass through the heat-source side heat exchanger 15b and to return to the intake side (low-pressure side) of the compressor 11. By means of pressure regulation (pressure reduction) by the throttle device 23 for bypass and sensible heat removal (specific enthalpy reduction) by heat exchange in the heat-source side heat exchanger 15b, while pressure rise on the intake side of the compressor 11 is restrained, the refrigerant is made to return. Here, the sensible heat removal of the split refrigerant is carried out by the heat-source side heat exchanger 15b in the present embodiment, however, the removal may be carried out by an exclusive heat exchanger. However, in the operation state of the air conditioner 100 using the bypass, a load required by the heat-source side unit 50 is small and it is considered that there is no need to make all the heat-source side heat exchangers 15a, 15b, 15c to function as condensers. Then, any of the heat-source side heat exchangers 15 (It may be plural. In the present embodiment, it is the heat-source side heat exchanger 15b) is selected as a heat exchanger capable of sensible heat removal by a heat transfer area or the like, for example, and used also as the heat exchanger in the refrigerant main circuit.

Next, a flow of the refrigerant in the refrigerant main circuit and an operation content of each of the equipment on the basis of the flow by each operation in the air conditioner 100 will be described. First, a case in which all the operating load-side units 50 conduct the cooling operation will be described. In the heat-source side unit 10, the compressor 11 compresses the taken-in refrigerant and discharges a high-pressure gas refrigerant. The refrigerant discharged from the compressor 11 flows through the four-way valve 12, the check valve 13a, and the opening / closing valve 14 into the heat-source side heat exchanger 15. While passing through the heat-source side heat exchanger 15, the high-pressure gas refrigerant is condensed by heat exchange and becomes a high-pressure liquid refrigerant and flows through the check valve 16, the check valve 13e into the high-pressure pipe 1 then into the cooling / heating branch unit 30. In the cooling / heating branch unit 30, the high-pressure liquid refrigerant flowing from the high-pressure pipe 1 flows through the gas / liquid separator 31 and the throttle device 32 into the liquid branch pipes 3a and 3b then into the load-side units 50a and 50b.

In the load-side units 50a and 50b, the liquid refrigerant flowing from the liquid branch pipes 3a, 3b, respectively, becomes the low-pressure gas-liquid two-phase refrigerant or low-pressure liquid refrigerant by means of pressure regulation through opening degree adjustment of the load-side throttle devices 51a, 51b and flows to the load-side heat exchangers 52a, 52b. The low-pressure gas-liquid two-phase refrigerant or low-pressure liquid refrigerant is evaporated by heat exchange and becomes a low-pressure gas refrigerant while passing through the load-side heat exchangers 52a, 52b and flows into the gas branch pipes 4a and 4b. The low-pressure gas refrigerant flowing from the gas branch pipes 4a and 4b flows through the opening / closing valve 34 of the cooling / heating branch unit 30 into the low-pressure pipe 2. The low-pressure gas refrigerant flowing from the low-pressure pipe 2 flows through the check valve 13b of the heat-source side unit 10, the four-way valve 12 as a flow-passage switching valve, the accumulator 17 and is taken into the compressor 11 again and circulates by discharging as mentioned above. This is a circulation path in the cooling operation of the refrigerant main circuit.

Next, the cooling-dominant operation will be described. Here, the description will be made on the premise that the load-side unit 50a carries out the cooling operation and the load-side unit 50b the heating operation. First, in the heat-source side unit 10, the compressor 11 compresses the taken-in refrigerant and discharges a high-pressure gas refrigerant. The discharged refrigerant flows through the four-way valve 12, the check valve 13a, and the opening / closing valve 14 to the heat-source side heat exchanger 15. The high-pressure gas refrigerant is condensed by heat exchange while passing through the heat-source side heat exchanger 15 so as to become a high-pressure gas-liquid two-phase refrigerant and flows through the check valve 16, the check valve 13e to the high-pressure pipe 1 and flows into the cooling / heating branch unit 30.

In the cooling / heating branch unit 30, the gas / liquid separator 31 separates the high-pressure gas-liquid two-phase refrigerant flowing from the high-pressure pipe 1 into a high-pressure gas refrigerant and a high-pressure liquid refrigerant. The high-pressure gas refrigerant flows through the opening / closing valve 34b to the gas branch pipe 4b. The high-pressure gas refrigerant is condensed by the heat exchange and becomes a high-pressure liquid refrigerant while passing through the load-side heat exchanger 52b and flows to the load-side throttle device 51b. By means of pressure regulation through the opening-degree adjustment of the load-side throttle devices 51b, the refrigerant becomes an intermediate-pressure gas-liquid two-phase refrigerant or an intermediate-pressure liquid refrigerant and flows to the liquid branch pipe 3b.

On the other hand, the high-pressure liquid refrigerant separated by the gas / liquid separator 31 and the intermediate-pressure gas-liquid two-phase refrigerant or the intermediate-pressure liquid refrigerant flowing from the liquid branch pipe 3b become a low-pressure gas-liquid two-phase refrigerant or low-pressure liquid refrigerant by means of pressure regulation through the opening-degree adjustment of the load-side throttle device 51a and flows into the load-side heat exchanger 52a. The low-pressure gas-liquid two-phase refrigerant or low-pressure liquid refrigerant is evaporated by the heat exchange and becomes a low-pressure gas refrigerant while passing through the load-side heat exchanger 52a and flows to the gas branch pipe 4a. The low-pressure gas refrigerant flowing from the gas branch pipe 4a flows through the opening / closing valve 34 of the cooling / heating branch unit 30 to the low-pressure pipe 2.

Here, if the inflow liquid refrigerant is large in quantity or the opening degree of the load-side throttle device 51a is small, for example, an amount of the liquid refrigerant collected is getting large in a section (hereinafter referred to as a liquid pipe line) in the load-side throttle devices 51a and 51b, the liquid branch pipes 3a and 3b, and the throttle devices 32 and 33 on the cooling / heating branch unit side. As the amount of the liquid refrigerant is getting large, a pressure of the refrigerant in the liquid pipe line is raised. At this time, in the load-side unit 50b (load-side heat exchanger 52b), a differential pressure gets small between the liquid pipe line side (secondary side, liquid branch pipe 3b side) and the gas branch pipe 4b side. Thus, the refrigerant amount flowing to the load-side unit 50b is reduced, and the heating ability is lowered. Then, the device controller 40 adjusts the opening degree of the throttle device 33 on the cooling / heating branch unit side so as to flow the liquid collected in the liquid pipe line to the low-pressure pipe 2 and adjusts the pressure in the liquid pressure line.

As mentioned above, a low-pressure gas-liquid two-phase refrigerant flows through the low-pressure pipe 2 in which the low-pressure gas refrigerant flowing from the gas branch pipe 4a and the low-pressure liquid refrigerant flowing from the throttle device 33 on the cooling / heating branch unit side or a two-phase refrigerant of low-pressure gas and liquid are mixed. In the heat-source side unit 10, the low-pressure gas-liquid two-phase refrigerant flowing from the low-pressure pipe 2 flows through the check valve 13b of the heat-source side unit 10, the four-way valve 12, and the accumulator 17. The gas refrigerant is taken into the compressor 11 again and circulates by discharging as mentioned above. This makes a circulation path at the cooling-dominant operation in the refrigerant main circuit.

Next, a case in which all the operating load-side units 50 carry out the heating operation will be described. In the heat-source side unit 10, the compressor 11 compresses and pressurizes the taken-in refrigerant and discharges the high-pressure gas refrigerant. The discharged refrigerant flows through the four-way valve 12 and the check valve 13d to the high-pressure pipe 1 and flows into the cooling / heating branch unit 30. In the cooling / heating branch unit 30, the high-pressure gas refrigerant flowing from the high-pressure pipe 1 flows through the gas / liquid separator 31 and the opening / closing valve 34 to the gas branch pipes 4a and 4b. The high-pressure gas refrigerant is condensed by the heat exchange and becomes the high-pressure liquid refrigerant while passing through the load-side heat exchangers 52a and 52b and flows into the load-side throttle devices 51a and 51b. By means of the pressure regulation through the opening-degree adjustment by the load-side throttle devices 51a and 51b, the refrigerant becomes a low-pressure gas-liquid two-phase refrigerant or low-pressure liquid refrigerant and flows to the liquid branch pipes 3a and 3b. The low-pressure gas-liquid two-phase refrigerant or low-pressure liquid refrigerant flowing from the liquid branch pipes 3a and 3b flows through the throttle device 33 of the cooling / heating branch unit 30 to the low-pressure pipe 2. It further flows through the check valve 13c of the heat-source side unit 10, the opening / closing valve 14, the load-side heat exchanger 15, the check valve 16, the check valve 13f, the four-way valve 12, and the accumulator 17 and is taken into the compressor 11 again and circulates by being pressurized and discharged as mentioned above. This makes a circulation path in the heating operation in the refrigerant main circuit.

The heating-dominant operation will be described. Here, a case will be described as well in which the load-side unit 50a carries out the cooling operation and the load-side unit 50b the heating operation. In the heat-source side unit 10, the compressor 11 compresses and pressurizes the taken-in refrigerant and discharges the high-pressure gas refrigerant. The discharged refrigerant flows through the four-way valve 12 and the check valve 13d to the high-pressure pipe 1. In the cooling / heating branch unit 30, the high-pressure gas refrigerant flowing from the high-pressure pipe 1 flows through the gas-liquid separator 31 and the opening / closing valve 34 to the gas branch pipe 4b. The high-pressure gas refrigerant flowing from the gas branch pipe 4b is condensed by the heat exchange while passing through the load-side heat exchanger 52b and becomes a high-pressure liquid refrigerant and flows into the load-side throttle device 51b. By means of the pressure regulation through the opening-degree adjustment by the load-side throttle device 51b, the refrigerant becomes an intermediate-pressure gas-liquid two-phase refrigerant or intermediate-pressure liquid refrigerant and flows to the liquid branch pipe 3b.

The intermediate-pressure gas-liquid two-phase refrigerant or intermediate-pressure liquid refrigerant flowing from the liquid branch pipe 3b flows to the liquid branch pipe 3a. By means of pressure regulation through the opening degree adjustment by the load-side throttle device 51a, the refrigerant becomes a low-pressure gas-liquid two-phase refrigerant or low-pressure liquid refrigerant and flows into the load-side heat exchanger 52a. The low-pressure gas-liquid two-phase refrigerant or low-pressure liquid refrigerant is evaporated by the heat exchange while passing through the load-side heat exchanger 52a and becomes a low-pressure gas refrigerant and flows to the gas branch pipe 4a. The low-pressure gas refrigerant flowing from the gas branch pipe 4a flows through the opening / closing valve 34 of the cooling / heating branch unit 30 to the low-pressure pipe 2. Here, in the heating-dominant operation, since the liquid refrigerant might be collected in the liquid pipe line as well, the opening degree of the throttle device 33 on the cooling / heating branch unit side is adjusted so as to flow the liquid collected in the liquid pipe line to the low pressure pipe 2 and pressure adjustment is performed in the liquid pipe line.

As mentioned above, the low-pressure gas-liquid two-phase refrigerant flows through the low-pressure pipe 2 in which the low-pressure gas refrigerant flowing from the gas branch pipe 4a and the low-pressure liquid refrigerant or low-pressure two-phase refrigerant of gas and liquid flowing from the throttle device 33 on the cooling / heating branch unit side are mixed. Moreover, the refrigerant is taken into the compressor 11 again through the check valve 13c of the heat-source side unit 10, the opening / closing valve 14, the load-side heat exchanger 15, the check valve 16, the check valve 13f, the four-way valve 12, and the accumulator 17 and circulates by being pressurized and discharged as mentioned above. This makes a circulation path at the heating-dominant operation in the refrigerant main circuit.

Next, a case in which the refrigerant is circulated using the bypass circuit will be described. In the present embodiment, at the heating operation or heating-dominant operation, a case will be described in which only the load-side unit 50a having the load-side heat exchanger 52a with a small heat exchange capacity (load) carries out the heating operation. Thus, the gas refrigerant discharged from the compressor 11 is condensed only by the load-side heat exchanger 52a.

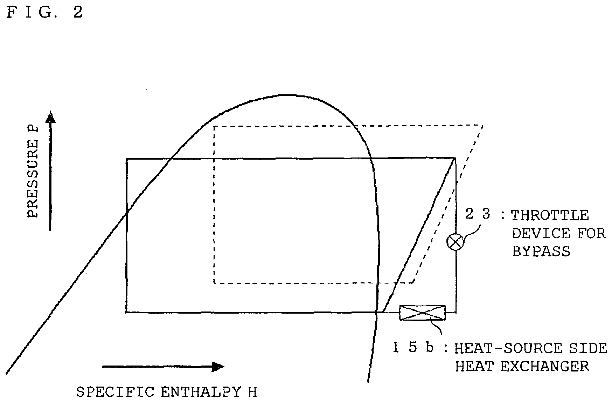

Fig. 2 is a Mollier diagram (p-h diagram) illustrating a state of the refrigerant of the air conditioner 100 according to the present embodiment. For example, even if the driving frequency of the compressor 11 is set at the minimum, when the ability of supply by the compressor 11 exceeds the heat exchange capacity in the load-side unit 50a, the load-side heat exchanger 52a of the load-side unit 50a cannot fully condense the refrigerant. Thus, a specific enthalpy difference Δh between a primary side of the load-side unit 50a (to be a refrigerant inlet side in the heating operation) and the liquid pipe line becomes smaller, so that on a secondary side of the load-side heat exchanger 52a (between the load-side heat exchanger 52a and the load-side throttle device 51a. To become a refrigerant outlet side in the heating operation), a tendency of outflow of the gas-liquid two-phase refrigerant gets stronger (the Mollier diagram shown by a dot line in Fig. 2).

On the other hand, the opening degree of the load-side throttle device 51a of the load-side unit 50a is controlled by the controller 40 in the load-side unit 50a on the basis of a supercooling degree (subcool) SC of the liquid refrigerant flowing out of the load-side heat exchanger 52a. Here, an outflow of the gas-liquid two-phase refrigerant on the secondary side of the load-side heat exchanger 52a means that the supercooling degree SC is smaller than 0. Thus, in order to increase the supercooling degree SC, the controller 40 decreases the opening degree of the load-side throttle device 51a.

As a result, the refrigerant passing through the load-side throttle device 51a is decreased, while since the refrigerant is supplied from the compressor 11, the refrigerant density between the load-side throttle device 51a and the compressor 11 is increased. Moreover, the time during which the high-pressure gas refrigerant is shut up inside the load-side heat exchanger 52a of the load-side unit 50a gets longer. Until it is judged that the supercooling degree SC in the load-side unit 50a becomes a targeted supercooling degree SC above 0, the opening degree of the load-side throttle device 51a is also reduced. From the above, until the targeted supercooling degree SC is reached, a phenomenon (hereinafter referred to as high-pressure rise phenomenon) occurs in which the pressure of the refrigerant on the discharge side (high pressure side) of the compressor 11 continues to abnormally rise. Usually, the controller 40 tries to lower the high-pressure PS by lowering the driving frequency of the compressor 11, but if the driving frequency of the compressor 11 has reached a limit, the pressure cannot be lowered by controlling the compressor 11.

In order to avoid the above-mentioned phenomenon, two methods are conceivable. The first method is to increase an area of the heat exchanger of the load-side unit 50a or to increase an air volume flowing through the load-side unit 50a so as to increase the heat exchange capacity of the load-side unit 50a (to make correspond to the ability). The second method is to reduce the refrigerant amount flowing through the load-side unit 50a (to make correspond to the heat exchange capacity (load)).

Using either of the methods, the ability and the heat exchange capacity (load) are well-balanced and contained in the range of heat exchange capacity, so that the load-side heat exchanger 52a can condense the refrigerant. Moreover, the specific enthalpy difference Δh between the primary side (the inlet side in the heating operation) of the load-side unit 50a (load-side heat exchanger 52a) and the liquid pipe line (the secondary side of the load-side heat exchanger 52a) can be made large, so that the supercooling degree SC in the load-side unit 50a (the secondary side of the load-side heat exchanger 52a) can be set as a target. As a result, the refrigerant density between the throttle device 51a and the compressor 11 is getting low, and the high-pressure PS can be lowered.

Here, since the heat transfer area of the load-side heat exchanger 52a is fixed and the rotation speed of the load-side fan 53a is changed according to users as mentioned above, the heat exchange capacity is constant. Therefore, the load cannot be changed in order to control the state of the refrigerant as the former of the above-mentioned two methods. Thus, the state of the refrigerant needs to be controlled so that the ability corresponding to the load is supplied to lower the high-pressure PS as in the latter method.

In the present embodiment, the bypass for splitting the refrigerant by the bypass pipe 21, the opening / closing valve 22 for bypass, and the throttle device 23 for bypass is branched and provided from the piping on the discharge side of the compressor 11. By constituting a bypass circuit such that if it is judged that the high-pressure PS is not less than a predetermined pressure on the basis of a detection signal from the pressure sensor 61, the refrigerant discharged by the compressor 11 is split so as to lower the pressure by the throttle device 23 for bypass and is returned to the intake side of the compressor 11, the refrigerant amount flowing through the load-side unit 50 (refrigerant amount flowing through the refrigerant main circuit) can be reduced without losing balance of the refrigerating cycle. The refrigerant having passed through the bypass can be returned to the intake side of the compressor 11 as it is, but by removing sensible heat by the heat-source side heat exchanger 15, the pressure on the intake side (low-pressure side) of the compressor 11 is kept from rising.

As mentioned above, the refrigerant having passed the bypass is made to pass through the heat-source side heat exchanger 15b in the present embodiment. Here, selection of the heat-source side heat exchanger 15 for removing sensible heat of the split refrigerant will be described. As shown in Fig. 2, with respect to the refrigerant of the overheated vapor having passed the bypass (without raising the pressure on the intake side of the compressor 11,) the refrigerant having the heat exchange capacity that can remove sensible heat of a difference in the specific enthalpy (between the refrigerant on the discharge side and the refrigerant on the intake side of the compressor 11) from the refrigerant is selected from the heat-source side heat exchanger 15a, the heat-source side heat exchanger 15b, and the heat-source side heat exchanger 15c. The difference in the specific enthalpy can be calculated using values of the targeted high-pressure PS in the heating operation and heating-dominant operation, pressure on the intake side, temperature of the compressor 11, and temperature of the secondary side of the heat-source side heat exchanger 15 (when functioning as an evaporator, the outlet side), for example, as physical parameters, and moreover, on the basis of an assumed amount of the refrigerant passing through the bypass, a heat quantity for the heat exchange can be calculated. Then, it is only necessary to make a selection from the heat-source side heat exchanger 15 having the heat exchange capacity capable of heat exchange of the calculated heat quantity and to perform piping connection to have it communicate. Here, for example, the refrigerant passing through the bypass is made to flow only to the heat-source side heat exchanger 15b, but if sensible heat cannot be sufficiently removed by a single heat exchanger, for example, a plurality of heat-source side heat exchangers 15 may be combined.

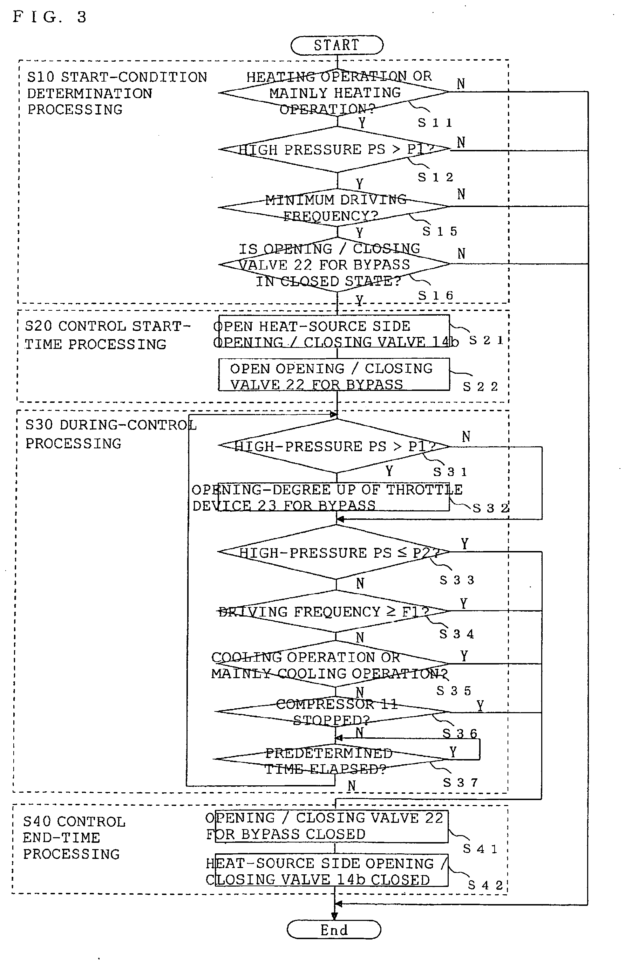

Fig. 3 is a diagram illustrating a flowchart according to high-pressure restraint control executed by the controller 40 in the embodiment 1. The controller 40 has, as mentioned above, the control start judgment processing portion 40a, the control start-time processing portion 40b, the during-control processing portion 40c, and the control end-time processing portion 40d. Processing executed by each portion will be described on the basis of Fig. 3.

The control start judgment processing portion 40a executes start-condition judgment processing on whether high-pressure restraint control is to be started or not (S10). In the present embodiment, it is judged on the basis of four items, namely, an operation mode when control is effective, values of physical parameters for judging high-pressure rise, the driving frequency of the compressor 11, and a state of the opening / closing valve 21 for the bypass circuit, which are indispensable in start judgment.

First, since the above problem does not occur when the heat-source side heat exchanger 15 capable of largely changing the heat exchange capacity functions as a condenser, it is judged whether the operation mode is the heating operation or the heating-dominant operation (S11). Then, it is judged if a high-pressure rise phenomenon has occurred or not. In the present embodiment, a physical parameter to perform judgment relating to the high-pressure rise phenomenon is the high-pressure PS judged on the basis of the signal transmitted from a pressure sensor 61. It is judged if a value of the high-pressure PS judged on the basis of the signal from the pressure sensor 61 is larger than a preset threshold value P1 (S12). If it is judged that the value is larger than the threshold value P1, it is regarded that the above-mentioned high-pressure rise phenomenon has occurred.

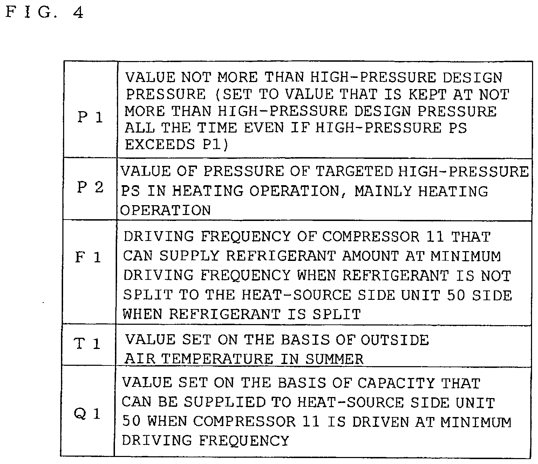

Fig. 4 is a diagram illustrating setting conditions of the threshold value in the high-pressure restraint control. An excessive rise of the high-pressure PS causes a failure of the air conditioner 100 (heat-source side unit 10), its upper limit (high-pressure design pressure) is set in the design. For the pressure exceeding the high-pressure design pressure, the controller 40 executes control to protect the air conditioner 100 (heat-source side unit 10). Since the high-pressure restraint control may perform processing at a pressure lower than that, the threshold value P1 is set at a value provided with a margin below the high-pressure design pressure.

Also, it is judged if the compressor 11 is driven at the minimum driving frequency (S15). This is because in order to execute the high-pressure restraint control in the case where a large amount of refrigerant flows to the load so as to cause overcapacity even if the compressor 11 is driven at the minimum driving frequency. To judge on the basis of the minimum driving frequency is convenient from the viewpoint of the energy efficiency. However, it is not necessarily limited to the minimum driving frequency but an upward margin may be given. Here, the high-pressure restraint control is to forcedly restrain the ability (refrigerant amount) to be supplied to the load-side unit 50. If the margin is too much, the compressor 11 with the largest energy consumption might be excessively driven with respect to an ability to be supplied, so that attention should be paid. Moreover, in the state where the opening / closing valve 22 for bypass is opened, the high-pressure restraint control has been started, and it is judged if the opening / closing valve 22 for bypass is in the closed state or not (S16), and if it is judged that the valve is closed, the control moves to the control start-time processing by the control start-time processing portion 40b.

If it is judged that the control start judgment processing portion 40a is to start the high-pressure restraint control, the control start-time processing portion 40b executes the control start-time processing (S20) that forms a bypass circuit passing through the opening / closing valve 22 for bypass - the throttle device 23 for bypass - the bypass pipe 21 - the heat-source side heat exchanger 15b to the intake side of the compressor 11. First, processing to close the heat-source side opening / closing valve 14b is executed (S21). Then, processing to open the opening / closing valve 22 for bypass is executed (S22). If the opening / closing valve 22 for bypass is opened first, the liquid refrigerant passing through the heat-source side opening / closing valve 14b and the gas refrigerant passing through the bypass pipe 21 are mixed and disturb the flow in the refrigerant circuit, therefore, it is necessary to close the heat-source side opening / closing valve 14b and thereafter, to open the opening / closing valve 22 for bypass so as to pass the refrigerant through the bypass. Here, depending on the selected heat-source side heat exchanger 15, the heat-source side opening / closing valve 14 to be closed might be the heat-source side opening / closing valve 14a or 14c instead of the heat-source side opening / closing valve 14b as mentioned above.

The during-control processing portion 40c executes the high-pressure restraint during-control processing when the control start-time processing portion 40b executes the control start-time processing (S30). In the high-pressure restraint during-control processing, opening-degree adjustment control processing and control end judgment processing are executed. First, regarding the opening-degree adjustment control processing of the throttle device 23 for bypass, if it is judged that the high-pressure-side pressure PS judged on the basis of the signal from a pressure sensor 61 is not less than a threshold value P1 (S31), processing to change and to increase (open) the opening degree of the throttle device 23 for bypass is executed so as to increase the amount of the refrigerant split to the bypass (S32). Here, the opening degree of the throttle device 23 for bypass will be described. An initial opening degree of the throttle device 23 for bypass is predetermined when the opening / closing valve 22 for bypass is opened at the control start processing. This initial opening degree is determined by the refrigerant amount to be flown to the bypass in order to set the targeted high-pressure PS not more than the pressure of the threshold value P2 on the basis of the parameters such as the ability supplied by the compressor 11 at the minimum frequency. Further, an opening-degree change margin of the throttle device 23 for bypass may be set arbitrarily in advance. In the present embodiment, a change of approximately 10% to 20% increase is made so that a large amount of the refrigerant is not split rapidly in order to lower the pressure but the balance of the refrigerating cycle can be maintained at the steady operation of the air conditioner 100. Here, the threshold value P2 is, as shown in Fig. 4, set so that the high-pressure PS at a temperature close to a targeted condensation temperature can be obtained in the load-side heat exchanger 52a functioning as a condenser in the heating operation and heating-dominant operation.

In the control end-time determination processing to be executed subsequently, determination is judged on the basis of four items, namely, a value of a physical parameter not requiring a high-pressure restraint control, the driving frequency of the compressor 11, the operation mode, and the state of the compressor 11. In the present embodiment, as the physical parameter for judgment, a high-pressure side pressure PS is used similarly to the control start-time judgment. It is judged if the high-pressure side pressure PS is not more than the threshold value P2 or not on the basis of the signal from the pressure sensor 61 (S33).

The controller 40 judges the load required by the load-side unit 10 on the basis of the signal from various sensors, changes the driving frequency of the compressor 11 by the inverter circuit and carries out ability supply according to the load. Then, it is judged if the compressor 11 is driven at the driving frequency not less than a threshold value F1 due to the increase in the load-side units 50 for carrying out the heating operation, for example (S34). Here, as shown in Fig. 4, as the threshold value F1, for example, the refrigerant amount is set which is discharged at the minimum driving frequency when the refrigerant is not split, and when the refrigerant is split, the driving frequency of the compressor 11 is set that can supply the refrigerant to the heat-source side unit 50 side. That is, at S34, it is judged if the compressor 11 supplies the refrigerant amount exceeding the refrigerant amount discharged at the minimum driving frequency to the load-side unit 50 or not.

It is judged if the load-side heat exchanger 52 is operated in the cooling operation or cooling-dominant operation in which the heat exchanger functions not as a condenser but as an evaporator (S35). Then, it is judged if the compressor 11 has been stopped or not (S36). If the during-control processing portion 40c judges that any one of the judgments at S33 to S36 is satisfied, processing is moved to the control end-time processing by the control end-time processing portion 40d. On the other hand, if it is judged that none of the conditions is satisfied, after waiting for a predetermined time (S37), the processing returns to S31, where the opening-degree adjustment control processing and the control end judgment processing are executed. The predetermined time becomes time till the subsequent sampling in the control software if the processing is executed, for example, by the during-control processing portion 40c (controller 40) with the control program or the like stored in storage means 45.

Here, since the two types of control processing executed by the during-control processing portion 40c do not interfere with each other as a control process, either of the processing may be executed first. However, if the control end judgment processing is executed prior to the opening-degree adjustment control processing, since it is likely that the control end is judged before the high-pressure restraint control after the control start-time processing portion 40b executes the processing, they are preferably executed in the order of the opening-degree adjustment control processing and the control end determination processing.

If the during-control processing portion 40c judges in the control end determination processing that the control is finished, the control end-time processing portion 40d executes the control end-time processing (S40) such that the refrigerant does not pass through the bypass and is returned to the refrigerant flow before the control start-time processing. First, processing to close the opening / closing valve 22 for bypass is executed (S41). Then, processing to open the heat-source side opening / closing valve 14b is executed (S42). Here, if the heat-source side opening / closing valve 14b is opened first, the liquid refrigerant flowing through the heat-source side opening / closing valve 14b and the gas refrigerant having passed through the bypass pipe 21 are mixed and disturb the refrigerant circuit flow, so that the opening / closing valve 22 for bypass is closed first, and after the refrigerant flow passing through the bypass is shut off, the heat-source side opening / closing valve 14b is opened.

As mentioned above, according to the air conditioner 100 of the embodiment 1, in the heating operation and heating-dominant operation, if the controller 40 judges that the high-pressure PS becomes a pressure not less than a predetermined threshold value P1 on the basis of the signal from the pressure sensor 61 when the compressor 11 is driven at the minimum driving frequency, the opening / closing valve 22 for bypass is opened so as to split part of the refrigerant flow by the bypass pipe 21 and to decrease the refrigerant amount flowing to the load-side unit 50 side, so that the ability (refrigerant amount) matching the heat exchange capacity of the load-side heat exchanger 52 can be supplied from the heat-source side unit 10 side, the high-pressure rise phenomenon is restrained, and temperature rise and abnormal stop of the compressor 11 caused by overheat can be prevented. Further, it is possible to improve, for example, COP (Coefficient of Performance), APF (Annual Performance Fact) and the like by reducing the number of start and stop times of the operation of the compressor 11 and the load-side unit 50 to promote energy saving. Since it is highly likely that the pressure rise phenomenon can occur in the air conditioner 100 capable of the cooling / heating mixed operation, particularly the above effects can be exerted, in which the heating operation might be carried out even in summer, so that the heat exchange capacity of the load-side heat exchanger 52 sometimes might be small.

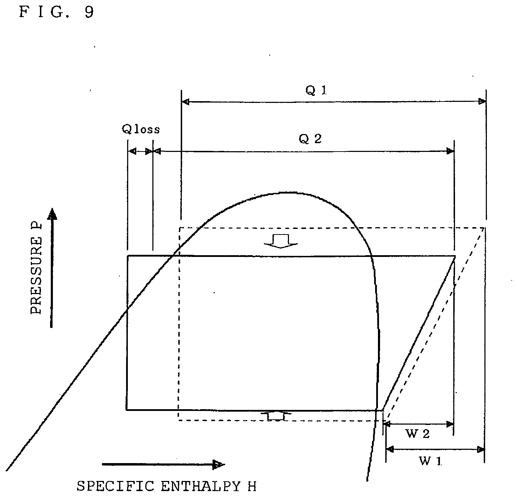

Fig. 9 is a diagram illustrating a Mollier diagram (p-h diagram) varying by control. When the method described in the embodiment 1 is used, the diagram (p-h diagram) changes as in Fig. 9, thereby if a characteristic is such that an input drop width (W1 - W2) in the compressor 11 is large with respect to ability loss Qloss by the condenser (load-side heat exchanger 52) of the load-side unit 50 used as the bypass circuit, the COP and APF are improved in addition to the above effect. Moreover, by reusing exhaust heat generated by the Qloss, the COP and APF can be further improved.

The cooling / heating branch unit 30 can connect with a plurality of load-side units 50a and 50b switchably in series or parallel connection. In this case, when the plurality of the load-side units 50a and 50b are switched from parallel connection to series connection, and only the load-side heat exchanger 52 of the load-side unit 50 on the upstream side with respect to the refrigerant flow is used as a condenser, for example, and the high-pressure is raised, since the opening / closing valve 22 for bypass is controlled to the open state so as to split the refrigerant, the excessive rise of the high pressure can be effectively restrained. Particularly, when the load-side unit 50a (low-performance unit) having the load-side heat exchanger 52a with a small heat exchange capacity (load) and the load-side unit 50b (high performance unit) with a large heat exchange capacity are mixed, it is likely that the high pressure is raised during the cooling / heating simultaneous operation in which the low- performance unit carries out the heating operation and the high- performance unit carries out the cooling operation. However, in the air conditioner of the present embodiment, since the controller 40 controls the opening / closing valve 22 for bypass to be the open state so as to split the refrigerant, the excessive rise of the high pressure can be effectively restrained. Thereby, by having the controller 40 specify the load-side unit 50 carrying out the heating operation, it is possible to judge that there is a fear of abnormal rise of the high pressure from its heat exchange ability, indoor temperature and the like not from a detected pressure value or using the pressure detected value in combination.

Since the controller 40 judges the pressure on the basis of the signal from the pressure sensor 61, the start of the high-pressure restraint control can be judged directly on the basis of the rise of the high-pressure PS. With regard to the refrigerant having passed through the bypass, since it is made to pass through the heat-source side heat exchanger 15b so as to remove sensible heat and is returned to the intake side of the compressor 11 to constitute the bypass circuit, the refrigerant of overheated vapor with a temperature higher than necessary flows into the intake side of the compressor 11 not to raise the temperature of the refrigerant on the intake side. Therefore, the high-pressure rise phenomenon can be further restrained. At this time, since one end of the bypass pipe 21 is made to communicate with any of the piping to the plurality of the heat-source side heat exchangers 15 so as to remove sensible heat of the refrigerant, space and costs can be reduced without using an exclusive heat exchanger. Moreover, since the refrigerant amount to be split by the throttle device 23 for bypass can be adjusted on the basis of the instruction of the controller 40 based on the pressure state of the high-pressure PS, rise of the high pressure can be effectively restrained.

### EMBODIMENT 2

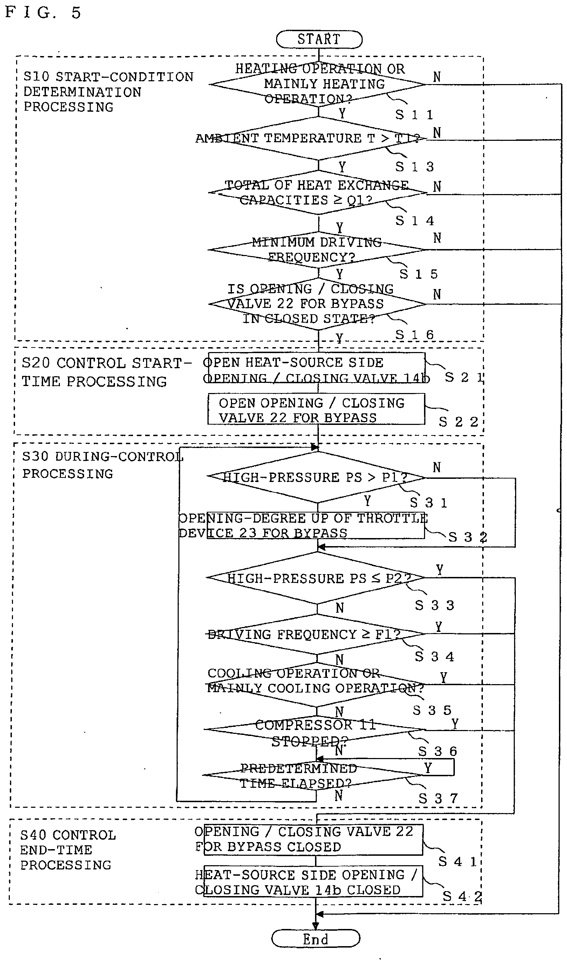

Fig. 5 is a diagram illustrating a flowchart relating to the high-pressure restraint control executed by the controller 40 in an embodiment 2. Here, the apparatus configuration of the air conditioner 100 is the same as in Fig. 1, and since the description has been already made in the embodiment 1, the description will be omitted. In the embodiment 1, the control start judgment processing portion 40a executes the start condition judgment processing on the basis of the high-pressure PS judged by the signal from the pressure sensor 61.

As mentioned above, in the heating operation and heating-dominant operation, the heat-source side heat exchanger 15 functions as an evaporator. Here, since the higher the temperature, the larger the heat quantity contained in the air in the case of the outside air temperature being 20°C or above as in the summer, for example, the heat exchange between the refrigerant and air is facilitated in the heat-source side heat exchanger 15. As a result, an evaporation temperature of the refrigerant tends to rise when the outside air temperature is high. This leads to a rise in the pressure on the intake side of the compressor 11, the high-pressure PS and constitutes one of the causes of the high-pressure rise phenomenon. Thus, in the present embodiment, the control start judgment processing portion 40a executes the start condition judgment processing on whether or not to start the high-pressure restraint control on the basis of an ambient temperature T judged by a signal from the temperature sensor 62. By making a judgment at a stage in which a factor of the pressure rise phenomenon occurs, early response is made possible such that the refrigerant is split to lower the high-pressure PS before rapid pressure rise to become a pressure higher than a high-pressure design pressure while the system is stabilized, such a situation can be prevented that control is executed in order to protect the air conditioner 100 (heat-source side unit 10).

In Fig. 5, those given the same step numbers as in Fig. 3 execute the same processing as described in the embodiment 1, so that the description will be omitted. As mentioned above, at S11, after the operation mode is judged, the judgment on the high-pressure rise phenomenon is made, but in the present embodiment, the physical parameter for the judgment is the ambient temperature T judged on the basis of the signal transmitted from the temperature sensor 62. It is judged if the value of the ambient temperature T judged on the basis of the signal from the temperature sensor 62 is larger than a preset threshold value T1 or not (S13). If it is judged as being larger, there is a sign of occurrence of the above-mentioned high-pressure rise phenomenon. Here, as shown in Fig. 4, the threshold value T1 is set on the basis of the outside air temperature in the summer.

Though it is possible to perform judgment only by the ambient temperature T, since no high-pressure rise phenomenon occurs if the load in the heat-source side unit 50 and the ability supplied by the compressor 11 are well-balanced, for example, by making only the ambient temperature T be the judgment condition, even in the operation state in which the high-pressure rise phenomenon cannot occur, it might be judged that the high-pressure restraint control is to be started. Therefore, another judgment condition (particularly condition relating to the load of the load-side unit 50) is preferably added. Then, processing to judge the number of load-side units 50 carrying out the heating operation, for example, is executed. In the present embodiment, the total of the parameters relating to the heat exchange capacity of the load-side units 50 carrying out the heating operation is calculated, and it is judged if the summation is not more than a threshold value Q1 or not (S14). As shown in Fig. 4, the threshold value Q1 is set on the basis of the ability that can be supplied to the heat-source side unit 50 when the compressor 11 is driven at the minimum driving frequency, for example. With regard to the parameter relating to the heat exchange capacity in each of the load-side units 50, for example, the data is stored in the storage device 41. The control start judgment processing portion 40a judges the operation state of each of the heat-source side units 50 on the basis of a signal transmitted from the load-side controller 54 of each heat-source side unit 50, reads out data of the parameter relating to the heat exchange capacity of the heat-source side unit carrying out the heating operation from the storage device 41, and calculates the summation.

If it is judged that the summation is not more than the threshold value Q1, there is a possibility that the high-pressure rise phenomenon occurs. Here, as mentioned above, start of the high-pressure restraint control is judged at a stage before the high-pressure rise phenomenon actually occurs. Thus, if the threshold value P2 is the same as the embodiment 1, the condition of being not more than the threshold value P2 might be already satisfied at a stage when the opening / closing value 22 for bypass is opened. Then, when the start judgment processing is made on the basis of the ambient temperature T, the threshold P2 may be set lower than the case of the embodiment 1.

As mentioned above, according to the air conditioner of the embodiment 2, the high-pressure rise phenomenon is restrained, temperature rise and abnormal stop of the compressor 11 caused by overheat is prevented and energy saving is promoted as in the embodiment 1. Since the controller 40 judges the ambient temperature T on the basis of the signal from the temperature sensor 62, if the outside air temperature is high such as in the summer when the high-pressure rise phenomenon can easily occur, the judgment can be made at a stage in which the factor occurs, so that early response can be made.

### EMBODIMENT 3

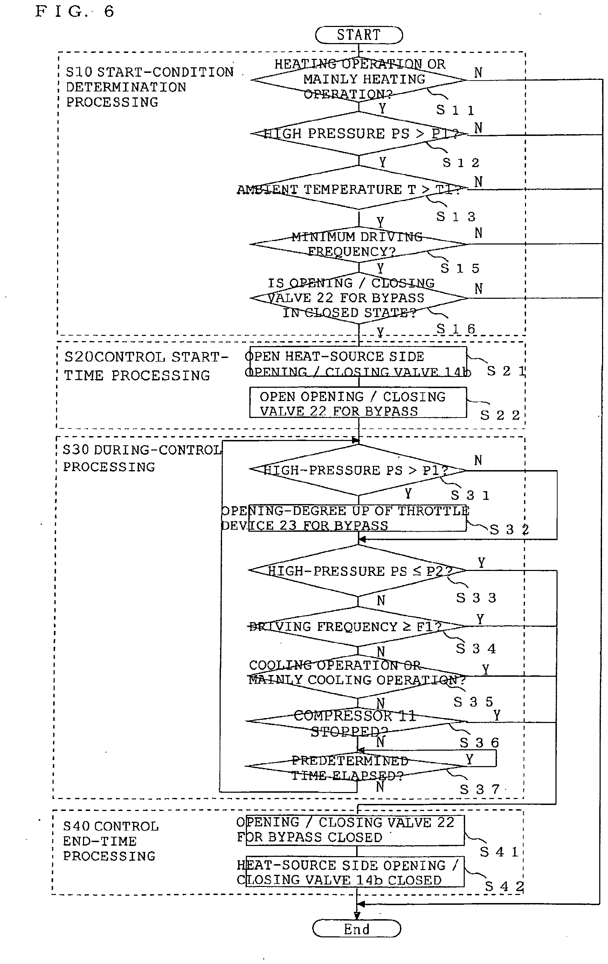

Fig. 6 is a diagram illustrating a flowchart relating to the high-pressure restraint control executed by the controller 40 in an embodiment 3. In the present embodiment, since the apparatus configuration of the air conditioner 100 is the same as in Fig. 1, the description will be omitted. In Fig. 6, those given the same step numbers as in Figs. 3 and 5 execute the same processing as in the processing described in the embodiments 1 and 2, and the description will be omitted. In the present embodiment, the start condition judgment processing is executed by the control start judgment processing portion 40a on the basis of both the high-pressure PS judged on the basis of the signal from the pressure sensor 61 and the ambient temperature T judged on the basis of the signal from the temperature sensor 62. By increasing the bases for judgment on whether the high-pressure restraint control is to be executed or not by the high-pressure PS and the ambient temperature T, the judgment according to the state of the air conditioner 100 can be made.

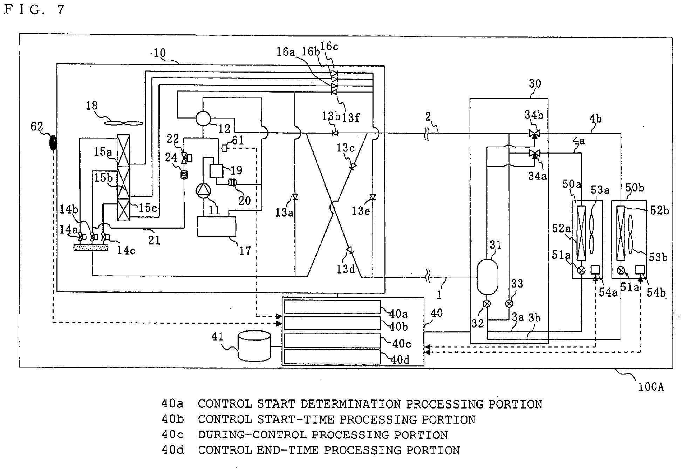

Fig. 7 is a configuration diagram of an air conditioner 100A. When the refrigerant amount (per unit time) to be split is determined in advance, for example, the opening-degree adjustment by the throttle device 22 for bypass is not needed. Then instead of the throttle device 22 for bypass, a capillary tube 24 for passing a certain amount of the refrigerant is used.

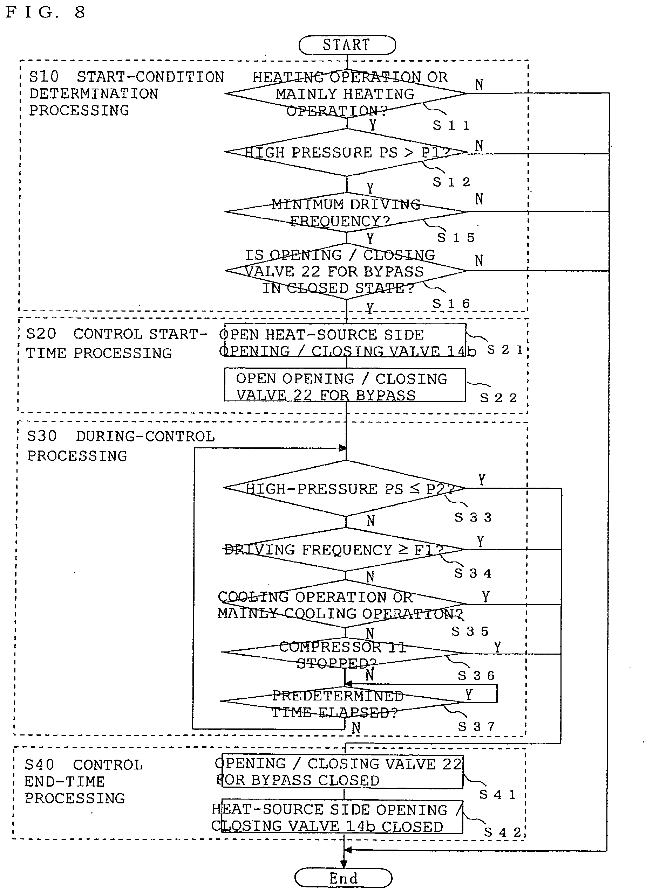

Fig. 8 is a diagram illustrating a flowchart relating to the high-pressure restraint control executed by the controller 40 of the air conditioner of Fig. 7 In Fig. 8, since those given the same step numbers as in Fig. 3 execute the same processing as in the processing described in the embodiment 1, descriptions will be omitted. As shown in Fig. 8, in the high-pressure restraint during-control processing executed by the during-control processing portion 40c of the controller 40, the processing S31 and S32 to be the above-mentioned opening-degree adjustment control processing do not have to be executed. Thus, processing burden of the during-control processing portion 40c in the controller 40 can be reduced.

## Claims

1. Air conditioner (100) capable of a cooling/heating mixed operation in which a refrigerant circulates through a refrigerant circuit formed by connecting, with piping:
a heat-source side unit (10) having a heat-source side heat exchanger (15) and a compressor (11);
a plurality of load-side units (50) each having a load-side throttle device (51) and a load-side heat exchanger (52); and
a cooling / heating branch unit (30) having a gas / liquid separator (31) for supplying a gas refrigerant to said load-side unit (50) that carries out a heating operation and for supplying a liquid refrigerant to said load-side unit (50) that carries out a cooling operation,
the air conditioner (100) comprising:
a bypass pipe (21) forming a bypass into which the refrigerant discharged by said compressor (11) is split to flow into piping leading to the inlet side of the refrigerant when the heat-source side heat exchanger (15) functions as an evaporator;
an opening / closing valve (22) for bypass that controls a split flow of the refrigerant to said bypass pipe (21) by opening / closing;
a throttle device (23) for bypass for controlling an amount of said split refrigerant provided to said bypass; and
control means (40) for executing processing in which it is judged if there is an abnormal rise or a fear of the abnormal rise in a refrigerant pressure on the discharge side of said compressor (11) when an operation is performed that said heat-source side heat exchanger (15) functions as an evaporator and at least one of said load-side heat exchangers (52) functions as a condenser and if it is judged that there is the abnormal rise or a fear thereof, said opening / closing valve (22) for bypass is made to open and an opening degree of said throttle device (23) for bypass is controlled on the basis of a pressure of the refrigerant on the discharge side of said compressor (11) so as to split the refrigerant to said bypass pipe (21).

2. Air conditioner (100) according to claim 1, wherein
said plurality of load-side units (50) are constituted by a high-ability unit and a low-ability unit; and
said control means (40) controls said opening / closing valve (22) for bypass to be an open state in a cooling / heating simultaneous operation in which said low-ability unit performs heating operation and said high-ability unit performs cooling operation.

3. Air conditioner (100) according to one of claims 1 to 2, wherein
said control means (40) judges on the basis of a signal from pressure detection means (61) for detecting a pressure of the refrigerant on a discharge side of said compressor (11) if the pressure of the refrigerant on said discharge side exceeds a predetermined pressure or not so as to judge said abnormal rise.

4. Air conditioner (100) according to one of claims 1 to 3, wherein
said control means (40) judges on the basis of a signal from temperature detection means (62) for detecting an ambient temperature of said heat-source side unit (10) if said ambient temperature exceeds a predetermined temperature or not so as to judge the fear of said abnormal rise.

5. Air conditioner (100) according to one of claims 1 to 4, wherein
said heat-source side heat exchanger (15) is constituted by piping connection of a plurality of heat exchangers (15a,15b,15c) in parallel with the refrigerant circuit and
one end of said bypass pipe (21) and the piping to any of said heat exchangers (15a, 15b, 15c) are made to communicate with each other so that the refrigerant having passed through said bypass pipe (21) returns to an intake side of said compressor (11) through any of said plurality of heat exchangers (15a,15b,15c).

6. Air conditioner (100) according to one of claims 1 to 5, wherein
said compressor (11) is a variable-capacity compressor having an inverter circuit for changing a driving frequency and
said control means (40) executes processing to open said opening / closing valve (22) for bypass and to split the refrigerant to said bypass pipe (21) in addition to the judgment on whether there is said abnormal rise or a fear of the abnormal rise when it is judged that said compressor (11) is driving at a frequency not more than a predetermined driving frequency.

7. Air conditioner (100) according to one of claims 1 to 6, wherein
a capillary tube (24) for controlling an amount of said split refrigerant to be constant is further provided with said bypass.

## Patentansprüche

1. Klimaanlage (100),
die in der Lage ist, in einem Kühl-/Heizmischbetrieb zu arbeiten, in welchem ein Kältemittel durch einen Kältemittelkreislauf zirkuliert, der gebildet ist durch Verbindung mittels Rohrleitungen:
einer wärrmequellenseitigen Einheit (10), die einen wärmequellenseitigen Wärmetauscher (15) und einen Verdichter (11) aufweist;
einer Vielzahl von lastseitigen Einheiten (50), die jeweils eine lastseitige Drosselvorrlchtung (51) und einen lastseitigen Wärmetauscher (52) aufweisen; und
einer Kühl-/Heizverzweigungseinheit (30), die einen Gas-/Flüssigkeitsabscheider (31) aufweist, zum Zuführen eines gasförmigen Kältemittels zu der lastseitigen Einheit (50), die einen Heizbetrieb durchführt, und zum Zuführen eines flüssigen Kältemittels zu der lastseitigen Einheit (50), die einen Kühlbetrieb durchführt,
wobei die Klimaanlage (100) umfasst:
ein Bypassrohr (21), das einen Bypass bildet, in welchen das vom Verdichter (11) ausgegebene Kältemittel aufgeteilt wird, um in Rohrleitungen zu strömen, die zur Einlassseite des Kältemittels führen, wenn der wärmequellenseitige Wärmetauscher (15) als ein Verdampfer wirkt;
ein Bypass-Öffnungs-/Schließventil (22), das eine aufgeteilte Strömung des Kältemittels zum Bypassrohr (21) durch Öffnen/Schließen steuert;
eine Bypass-Drosselvorrichtung (23) zum Steuern einer Menge des dem Bypass bereitgestellten aufgeteilten Kältemittels; und
ein Steuermittel (40) zum Ausführen einer Verarbeitung, in welcher beurteilt wird, ob ein anormaler Anstieg oder eine Gefahr des anormalen Anstiegs in einem Kältemitteldruck auf der Auslassseite des Verdichters (11) besteht, wenn ein Betrieb durchgeführt wird, bei dem der wärmequellenseitige Wärmetauscher (15) als ein Verdichter wirkt und zumindest einer der lastseitigen Wärmetauscher (52) als ein Kondensator wirkt, und wenn beurteilt wird, dass der anormale Anstieg oder eine Gefahr desselben besteht, das Bypass-Öffnungs-/Schließventil (22) veranlasst wird, zu öffnen, und ein Öffnungsgrad der Bypass-Drosselvorrichtung (23) auf der Grundlage eines Druckes des Kältemittels auf der Auslassseite des Verdichters (11) gesteuert wird, so dass das Kältemittel zum Bypassrohr (21) aufgeteilt wird.

2. Klimaanlage (100) nach Anspruch 1, wobei
die Vielzahl der lastseitigen Einheiten (50) durch eine Einheit hoher Leistungsfähigkeit und eine Einheit niedriger Leistungsfähigkeit gebildet sind; und
das Steuermittel (40) das Bypass-Öffnungs-/Schließventil (22) steuert, um in einem Kühl-/Heizsimultanbetrieb, in welchem die Einheit geringer Leistungsfähigkeit Heizbetrieb durchführt und die Einheit hoher Leistungsfähigkeit Kühlbetrieb durchführt, ein offener Zustand zu sein.

3. Klimaanlage (100) nach einem der Ansprüche 1 bis 2, wobei
das Steuermittel (40) auf der Grundlage eines Signals von einem Druckerfassungsmittel (61) zum Erfassen eines Druckes des Kältemittels an einer Auslassseite des Verdichters (11) beurteilt, ob der Druck des Kältemittels an der Auslassseite einen vorherbestimmten Druck überschreitet oder nicht, um den anormalen Anstieg zu beurteilen.

4. Klimaanlage (100) nach einem der Ansprüche 1 bis 3, wobei
das Steuermittel (40) auf der Grundlage eines Signals vom Temperaturerfassungsmittel (62) zum Erfassen einer Umgebungstemperatur der wärmequellenseitigen Einheit (10) beurteilt, ob die Umgebungstemperatur eine vorherbestimmte Temperatur überschreiten oder nicht, um die Gefahr des anormalen Anstiegs zu beurteilen,

5. Klimaanlage (100) nach einem der Ansprüche 1 bis 4, wobei der wärmequellenseitige Wärmetauscher (15) durch Rohrleitungsverbindung einer Vielzahl von Wärmetauschern (15a, 15b, 15c) parallel zum Kältemittelkreislauf gebildet ist, und
ein Ende des Bypassrohrs (21) und die Rohrleitung zu irgendeinem der Wärmetauscher (15a, 15b, 15c) veranlasst werden, miteinander zu kommunizieren, so dass das Kältemittel, welches das Bypassrohr (21) passiert hat, zu einer Einlassseite des Verdichters (11) durch irgendeinen der Vielzahl von Wärmetauschern (15a, 15b, 15c) zurückströmt

6. Klimaanlage (100) nach einem der Ansprüche 1 bis 5, wobei
der Verdichter (11) ein Verdichter mit variabler Kapazität ist, der eine Inverterschaltung zum Verändern einer Antriebsfrequenz aufweist, und
wobei das Steuermittel (40) eine Verarbeitung ausführt, um das Bypass-Öffnungs-/Schließventil (22) zu öffnen, und um das Kältemittel zum Bypassrohr (21) aufzuteilen, zusätzlich zur Beurteilung, ob der anormale Anstieg oder eine Gefahr des anormalen Anstiegs vorhanden ist, wenn beurteilt wird, dass der Verdichter (11) mit einer Frequenz betrieben wird, die nicht höher ist als eine vorherbestimmte Antriebsfrequenz.

7. Klimaanlage (100) nach einem der Ansprüche 1 bis 6, wobei
weiterhin ein Kapillarrohr (24) zum Steuern, dass eine Menge des aufgeteilten Kältemittels konstant ist, mit dem Bypass bereitgestellt ist.

## Revendications

1. Climatiseur (100) capable de fonctionner dans un mode mixte de refroidissement / de chauffage, dans lequel circule un fluide frigorigène à travers un circuit de fluide frigorigène constitué en connectant, grâce à une tuyauterie :
une unité du côté source de chaleur (10) qui présente un échangeur de chaleur du côté source de chaleur (15) et un compresseur (11) ;
une pluralité d'unités du côté charge (50) qui présentent chacune un dispositif de réglage du côté charge (51) et un échangeur de chaleur du côté charge (52) ; et
une unité de ramification de refroidissement / de chauffage (30) qui présente un dispositif de séparation de gaz 1 de liquide (31), destinée à fournir un fluide frigorigène gazeux à ladite unité du côté charge (50) qui exécute une opération de chauffage, et à fournir un fluide frigorigène liquide à ladite unité du côté charge (50) qui exécute une opération de refroidissement ;
le climatiseur (100) comprenant :
une canalisation de dérivation (21) qui constitue une dérivation dans laquelle le fluide frigorigène qui sort dudit compresseur (11) est scindé de façon à s'écouler dans la tuyauterie qui conduit au côté entrée du fluide frigorigène lorsque l'échangeur de chaleur du côté source de chaleur (15) fonctionne en tant qu'évaporateur ;
une soupape d'ouverture / de fermeture (22) de dérivation, qui commande l'écoulement scindé du fluide frigorigène vers ladite canalisation de dérivation (21) en procédant à une ouverture / à une fermeture ;
un dispositif de réglage (23) de dérivation destiné à commander la quantité de dudit fluide frigorigène scindé fourni à ladite dérivation ; et
des moyens de commande (40) destinés à exécuter un traitement dans lequel on juge s'il y a une élévation anormale, ou un risque d'élévation anormale, de la pression du fluide frigorigène du côté sortie dudit compresseur (11) quand une opération est exécutée selon laquelle ledit échangeur de chaleur du côté source de chaleur (15) fonctionne en tant qu'évaporateur, et lorsque l'un au moins desdits échangeurs de chaleur du côté charge (52) fonctionne en tant que condenseur, et si on juge qu'il y a une élévation anormale, ou un risque d'élévation anormale, ladite soupape d'ouverture / de fermeture (22) de dérivation s'ouvre, et le degré d'ouverture dudit dispositif de réglage (23) de dérivation est commandé sur la base de la pression du fluide frigorigène du côté sortie dudit compresseur (11) de façon à scinder le fluide frigorigène vers ladite canalisation de dérivation (21).

2. Climatiseur (100) selon la revendication 1, dans lequel :
ladite pluralité d'unités du côté charge (50) sont constituées par une unité à capacité élevée et une unité à capacité faible ; et
lesdits moyens de commande (40) commandent ladite soupape d'ouverture / de fermeture (22) de dérivation dans un état ouvert dans une opération simultanée de refroidissement / de chauffage dans laquelle ladite unité à capacité faible exécute une opération de chauffage, et dans laquelle ladite unité à capacité élevée exécute une opération de refroidissement.

3. Climatiseur (100) selon la revendication 1 ou la revendication 2, dans lequel :
lesdits moyens de commande (40) jugent, sur la base d'un signal en provenance de moyens de détection de la pression (61) destinés à détecter la pression du fluide frigorigène du côté sortie dudit compresseur (11), si la pression du fluide frigorigène dudit côté sortie dépasse ou non une pression prédéterminée, de façon à juger ladite élévation anormale,

4. Climatiseur (100) selon l'une quelconque des revendications 1 à 3, dans lequel :
lesdits moyens de commande (40) jugent, sur la base d'un signal en provenance de moyens de détection de la température (62) destinés à détecter la température ambiante de ladite unité du côté source de chaleur (10), si ladite température ambiante dépasse ou non une température prédéterminée, de façon à juger un risque de ladite élévation anormale.

5. Climatiseur (100) selon l'une quelconque des revendications 1 à 4, dans lequel:
ledit échangeur de chaleur du côté source de chaleur (15) est constitué par une connexion de tuyauterie d'une pluralité d'échangeurs de chaleur (15a, 15b, 15c) en parallèle avec le circuit de fluide frigorigène ; et
une extrémité de ladite canalisation de dérivation (21) et la tuyauterie vers l'un quelconque desdits échangeurs de chaleur (15a, 15b, 15c) communiquent ensemble de telle sorte que le fluide frigorigène qui a traversé ladite canalisation de dérivation (21), revienne vers un côté entrée dudit compresseur (11) à travers l'un quelconque de ladite pluralité d'échangeurs de chaleur (15a, 16b, 15c).

6. Climatiseur (100) selon l'une quelconque des revendications 1 à 5, dans lequel :
ledit compresseur (11) est un compresseur à capacité variable qui présente un circuit inverseur destiné à modifier la fréquence de commande ; et
lesdits moyens de commande (40) exécutent un traitement destiné à ouvrir ladite soupape d'ouverture / de fermeture (22) de dérivation, et à scinder le fluide frigorigène vers ladite canalisation de dérivation (21), en plus du jugement qui permet de savoir s'il y a ladite élévation anormale, ou un risque d'élévation anormale, quand on juge que ledit compresseur (11) fonctionne à une fréquence qui n'est pas supérieure à une fréquence de commande prédéterminée.

7. Climatiseur (100) selon l'une quelconque des revendications 1 à 6, dans lequel :
un tube capillaire (24) destiné à commander la quantité dudit réfrigérant fluide frigorigène scindé de façon à ce qu'elle soit constante, est prévu en outre avec ladite dérivation.
